# EUROPEAN PATENT APPLICATION

(11) **EP 1 132 846 A1**
(43) Date of publication of application: **12.09.2001**
(21) Application number: 01302123.3
(22) Date of filing: 08.03.2001
(51) Int. Cl.: G06F 17/60

(54) **Information processing system**

(30) Priority: 09.03.2000 JP 2000064767
(71) Applicant: SONY CORPORATION, Tokyo 141 (JP)
(72) Inventor: Noborimoto, Yoshie, c/o Sony Corporation, Tokyo (JP); Hamaguchi, Tsutomu, c/o Sony Corporation, Tokyo (JP); Yoda, Atsuko, c/o Sony Corporation, Tokyo (JP)
(74) Representative: DeVile, Jonathan Mark, Dr.

(57) **Abstract**

An information processing system for collecting information about registered products, for providing support and marketing based on collected information. The system determines whether a supplied code is correctly identifying a product, said code being supplied from a purchaser of said product along with information about the purchaser; the code and the information associated with the purchaser is recorded and based on the recorded information, a notice is transmitted to the purchaser for requesting the purchaser for further information and a reply of a comment on the product.

## Description

The present invention relates to information processing systems.

Manufacturers fabricating and selling household electrical appliances ask the purchasers to fill a registration card containing purchaser's name and address fields for example and send the card back to the manufacturer to know the purchaser's name and address.

On the basis of the names and addresses entered in the returned registration cards, the manufacturer gets in contact with the purchasers to ask for the evaluation of the purchased products by telephone or ask them to fill a questionnaire. The manufacturer uses these hearings or answers of the questionnaires as a reference for future product developments, sales, or planning.

Problems in the above-mentioned prior-art techniques are that the collection rate of the registration cards is only about 3% and it takes as long as an average of about three months after sale of a product for the manufacturers to collect these few registration cards, thereby making it hard for the manufacturers to get the fresh and wide-ranging information about their products from as many users as possible.

According to one aspect of the present invention, there is provided an information processing system comprising: determination means for determining whether a code identifying a product purchased by a purchaser of the product, the code being supplied from the purchaser along with information associated with the purchaser; recording means for recording, if the code is found correct, the information associated with the purchaser; and transmission control means for controlling, on the basis of the information recorded in the recording means, the transmission of a notice for requesting the purchaser for a reply of a comment on the product.

Embodiments of the present invention relate generally to an information processing system and method and a recording medium and, more particularly, to an information processing system and method and a recording medium that manage the data of users of products.

Embodiments of the present invention can provide an information processing system and method and a recording medium that facilitate the prompt gathering of the comments, remarks, complaints, opinions, and other data about the products from their users.

The above-mentioned information processing system further comprises: selection means for selecting, on the basis of the information associated with the purchaser and recorded in the recording means, the purchaser requested to make the reply of the comment on the product; and the transmission control means controls the transmission of the notice to the selected purchaser for the reply of the comment on the product.

In the above-mentioned information processing system, the selection means selects the purchaser requested to make the reply of the comment on the product on the basis of a period passed after the purchase of the product.

In carrying out the invention and according to another aspect thereof, there is provided an information processing method comprising the steps of: determining whether a code identifying a product purchased by a purchaser of the product, the code being supplied from the purchaser along with information associated with the purchaser; recording, if the code is found correct, the information associated with the purchaser; and controlling, on the basis of the information recorded in the recording step, the transmission of a notice for requesting the purchaser for a reply of a comment on the product.

According to another aspect of the present invention, there is provided a recording medium recording a program comprising the steps of: determining whether a code identifying a product purchased by a purchaser of the product, the code being supplied from the purchaser along with information associated with the purchaser; recording, if the code is found correct, the information associated with the purchaser; and controlling, on the basis of the information recorded in the recording step, the transmission of a notice for requesting the purchaser for a reply of a comment on the product.

According to another aspect of the present invention there is provided a recording medium recording a program comprising the steps of: determining whether a code identifying a product purchased by a purchaser of the product, the code being supplied from the purchaser along with information associated with the purchaser; recording, if the code is found correct, the information associated with the purchaser; and controlling, on the basis of the information recorded in the recording step, the transmission of a notice for requesting the purchaser for a reply of a comment on the product.

In the information processing system, the information processing method, and the recording medium, it is determined whether a code identifying a product purchased by a user supplied from the user along with the information associated with the user is correct or not. If the code is found correct, the information associated with the user is recorded and, on the basis of the recorded information, the transmission of a notice requesting the user for making a reply of a comment on the purchased product is controlled.

The invention will now be described by way of example with reference to the accompanying drawings, throughout which like parts are referred to by like references, and in which:
FIG. 1 is a block diagram illustrating an exemplary configuration of a customer data management system practiced as one embodiment of the invention;
FIG. 2 is a diagram illustrating questionnaire answer data and registration data correlated by data conversion server;
FIG. 3 is a diagram illustrating an exemplary configuration of personal computer;
FIG. 4 is a flowchart describing a registration data input process;
FIG. 5 is a diagram illustrating one example of a startup screen;
FIG. 6 is a diagram illustrating one example of a connection setting screen;
FIG. 7 is a diagram illustrating one example of a name input screen;
FIG. 8 is a diagram illustrating one example of an address and other data input screen;
FIG. 9 is a diagram illustrating one example of an address and other data confirmation screen;
FIG. 10 is a diagram illustrating one example of a registration code and other data input screen;
FIG. 11 is a diagram illustrating one example of a menu screen;
FIG. 12 is a diagram illustrating one example of a questionnaire input screen;
FIG. 13 is a diagram illustrating another example of a questionnaire input screen;
FIG. 14 is a diagram illustrating still another example of a questionnaire input screen;
FIG. 15 is a flowchart describing a registration data recording process;
FIG. 16 is a flowchart describing a data conversion process;
FIG. 17 is a diagram illustrating one example of an association data conversion table;
FIG. 18 is a diagram illustrating one example of a header conversion table;
FIG. 19 is a diagram illustrating one example of a master conversion table;
FIG. 20 is a diagram illustrating one example of a questionnaire data conversion table;
FIG. 21 is a flowchart describing a process of recording registration data and questionnaire answer data;
FIG. 22 is a flowchart describing secondary questionnaire processing;
FIG. 23 is a flowchart describing a group interview mail sending process;
FIG. 24 is a flowchart describing an inquiry answering process;
FIG. 25 is a flowchart describing an answer recording process;
FIG. 26 is a flowchart describing a process of uploading answer data to Web server;
FIG. 27 is a flowchart describing an inquiry totalizing process;
FIG. 28 is an example of graphs displayed by call totalization/answer setting terminal unit;
FIG. 29 is another example of graphs displayed by call totalization/answer setting terminal unit;
FIG. 30 is further another example of graphs displayed by call totalization/answer setting terminal unit;
FIG. 31 is still another example of graphs displayed by call totalization/answer setting terminal unit;
FIG. 32 is a flowchart describing a questionnaire totalizing process; and
FIG. 33 is a flowchart describing a trade-in process.

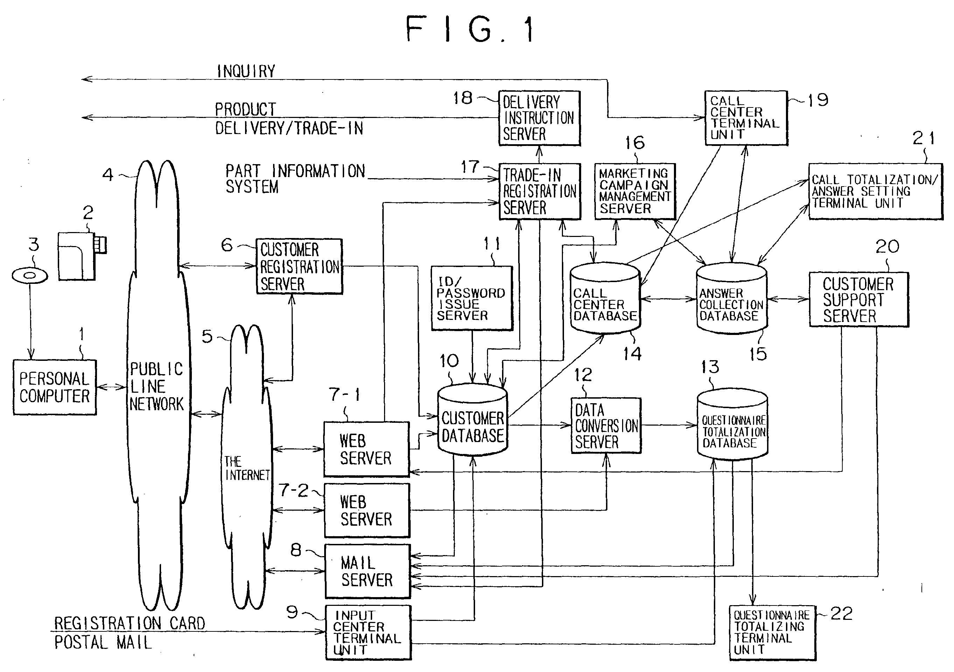

Now, referring to FIG. 1, there is shown the configuration of one embodiment of a customer data management system associated with the present invention. For example, the user (the purchaser of an imaging digital video cassette recorder 2) of a personal computer 1 may register as a user of the imaging digital video cassette recorder 2 (namely, make a so-called user registration) by one of the methods of using a registration CD-ROM (Compact Disc Read Only Memory) 3 packaged with the imaging digital video cassette recorder 2, connecting the personal computer 1 to a Web server 7-1 via the Internet 5 through an Internet service provider, not shown, or postal-mailing the registration card packaged with the imaging digital video cassette recorder 2.

Obviously, the imaging digital video cassette recorder 2 is merely illustrative; the present invention is also applicable to any household electrical appliances (for example, audio visual equipment, lighting equipment, and electric cooking equipment) or any household appliances (for example, desks and bicycles).

For the registration by the registration CD-ROM 3, the user loads the registration CD-ROM 3 into the personal computer 1 and makes it execute the registration program stored in the CD-ROM 3.

The personal computer 1 executes the registration program stored in the CD-ROM 3 to connect to a customer registration server 6 via a public line network 4. The personal computer 1 sends the registration data (about the user) including user name, address, and telephone number for example inputted by the user along the execution of the registration program stored in the CD-ROM 3 to the customer registration server 6 via the public line network 4.

The customer registration server 6 receives the registration data supplied by the personal computer 1 and sends the received data, user by user, to a customer database 10.

The personal computer 1 connected to the customer registration server 6 via the public line network 4 is further connected to a Web server 7-2 via the customer registration server 6 and the Internet 5. The personal computer 1 receives from the Web server 7-2 the data for displaying a GUI (Graphic User Interface) through which the user inputs the replies to a questionnaire, thereby displaying a questionnaire answer data input screen for example. The personal computer 1 then sends the questionnaire answer data inputted by the user to the Web server 7-2.

The Web server 7-2 receives the questionnaire answer data supplied from the personal computer 1 via the public line network 4 and the customer registration server 6 and supplies the received data to a data conversion server 12.

For the registration via the Internet 5, the personal computer 1 connects to the Internet 5 via the Internet service provider, not shown, to connect to the Web server 7-1. The personal computer 1 then sends the registration data including user name, address, and telephone number for example inputted by the user to the Web server 7-1 via the public line network 4 and the Internet 5.

The Web server 7-1 receives the registration data supplied from the personal computer 1 and sends the received registration data to the customer database 10.

The personal computer 1 connected to the Internet 5 via the Internet service provider is connected to the Web server 7-2 via the public line network 4 and the Internet 5. The personal computer 1 receives from the Web server 7-2 the data for displaying a GUI through which the user inputs the replies to the questionnaire, thereby displaying a questionnaire answer data input screen for example. The personal computer 1 then sends the questionnaire answer data inputted by the user to the Web server 7-2.

The Web server 7-2 receives the questionnaire answer data supplied from the personal computer 1 via the public line network 4 and the Internet 5 and supplies the received data to a data conversion server 12.

For the registration by postal mail, an operator of an input center terminal unit 9 which has received the registration cards sent by postal mail inputs the registration data entered in each registration card into the input center terminal unit 9. The input center terminal unit 9 sends the inputted registration data to the customer database 10.

The operator of the input center terminal unit 9 inputs the questionnaire replies entered in each registration card into the input center terminal unit 9. The input center terminal unit 9 sends the inputted questionnaire answer data to the customer database 10.

The customer database 10 receives the registration data from the customer registration server 6, the Web server 7-1, or the input center terminal unit 9. If any user corresponding to the received registration data has not been registered yet, the customer database 10 makes an ID/password issue server 11 issue that user's ID (Identification) and password, recording the registration data in associated with the issued ID. If the user corresponding to the received registration data has already been registered, the customer database 10 records the received registration data in association with the ID of the user corresponding to the already recorded registration data.

Upon recording the registration data, the customer database 10 supplies the recorded registration data to the data converter server 12, a call center database 14, and a trade-in registration server 17.

The customer database 10 makes a mail server 8 send mails (a so-called electronic mail) of questionnaires to those users for whom one month for example has passed since the purchase of the products.

When the replies to the questionnaires come, the personal computer 1 sends the answer data to the Web server 7-2. The Web server 7-2 receives the answer data from the personal computer 1 and supplies the data to a questionnaire totalization database 13.

In another example, the customer database 10 may select the users having personal computers in an age group 30 to 40 years old living in a metropolitan area and makes the mail server 8 send mails to these users for asking interviews.

The data obtained from interviewees are inputted in the input center terminal unit 9 to be supplied to the questionnaire totalization database 13.

The data conversion server 12 converts the format of the registration data supplied from the customer database 10 or the questionnaire answer data supplied from the Web server 7-2 into a predetermined format and outputs the converted registration data and the questionnaire answer data in correlation with each other to the questionnaire totalization database 13.

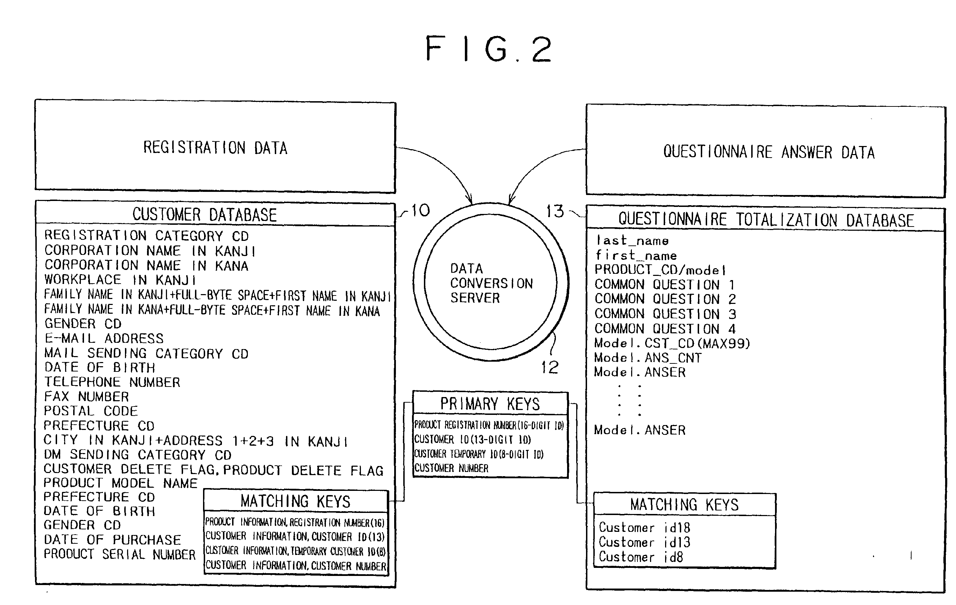

For example, the data conversion server 12 correlates the questionnaire answer data with the registration data by use of product registration number, customer ID, temporary customer ID, or a customer number for example as a primary key as shown in FIG. 2.

The questionnaire totalization database 13 records the registration data or questionnaire answer data supplied from the data conversion server 12.

The call center database 14 records the corresponding registration data supplied from the customer database 10.

When users make inquiries about the method of using purchased products or about complaints concerning therewith, the call center database 14 records the inquiry result data supplied from a call center terminal unit 19 as correlated with the registration data of the inquiring users as well as the data (inquiry items to be described later) for identifying the contents of particular inquiries.

An answer collection database 15 records the answers to the inquiries supplied from a call totalization/answer setting terminal unit 21 for example, in correlation with the inquiry items. When an inquiry is made by a user and in response to the request for answering that inquiry from the call center terminal unit 19, the answer collection database 15 sends the answer to that inquiry to the call center terminal unit 19. The operator of the call center can answer the inquiry by the user by referencing the answer displayed on the call center terminal unit 19.

When the inquiry answer process has been completed, the answer collection database 15 records the number of times inquiries have been made for each inquiry item on the basis of the inquiry result data supplied from the call center terminal unit 19.

A marketing campaign management server 16 stores the schedule data about product sale promotion campaign, events, and seminars for example. The marketing campaign management server 16 records the registration data for each user supplied from the customer database 10 and the answer data corresponding to the inquiries supplied from the answer collection database 15 in correlation with the data about participants in events and seminars for example.

When product-associated inquiries come along with inquiries for product sale promotion campaign, events, or seminars, the marketing campaign management server 16 receives the answers to these inquiries to use them as the answers to the product-associated inquiries from users. When the user inquiry process has been completed, the marketing campaign management server 16 sends the data for identifying the contents of these inquiries to the answer collection database 15.

The trade-in registration server 17 receives from a part information system the data about parts which are expected to run short and, on the basis of the received data, identifies a product of which parts are expected to run short (the parts being used in the product). The trade-in registration server 17 requests the customer database 10 for the registration data of the user who uses the product in question and then requests the call center database 14 for the inquiry result data with respect to that user. On the basis of the user registration data supplied from the customer database 10 and the corresponding inquiry result data supplied from the call center database 14, the trade-in registration server 17 selects the user owning the product to be traded in.

The trade-in registration server 17 makes the mail server 8 send a mail to the selected user telling the intention to trade in the user's product.

Receiving the response to the mail of trade-in from the personal computer 1, the Web server 7-1 supplies the response to the trade-in registration server 17. The trade-in registration server 17 sends an instruction to a delivery instruction server 18 to deliver a new product to the user and trade in the product in question.

From the product thus traded in, parts still serviceable are removed for reuse.

A customer support server 20 receives the data about the frequency of the inquiries for the inquiry items from the answer collection database 15 and reads highly frequent inquiry items and the answers to them from the answer collection database 15. The customer support server 20 uploads the highly frequent inquiry items and their answers to the Web server 7-1.

The call totalization/answer setting terminal unit 21 receives inquiry result data from the call center database 14 and, on the basis of inquiry result data setting conditions (for example, the number of product inquiries, the number of inquiries by product category, and the inquiry contents by product category), generates graphs and displays them.

The call totalization/answer setting terminal unit 21 receives inquiry result data from the call center database 14 and displays the received inquiry result data. When an answer (for example, an answer not recorded in the answer collection database 15 or an answer which the user can understand more easily) is inputted in response to the displayed inquiry result data, the call totalization/answer setting terminal unit 21 supplies the inputted answer to the answer collection database 15.

The questionnaire totalizing terminal unit 22 receives questionnaire data from the questionnaire totalization database 13 and, on the basis of questionnaire data setting conditions, generates graphs and displays them.

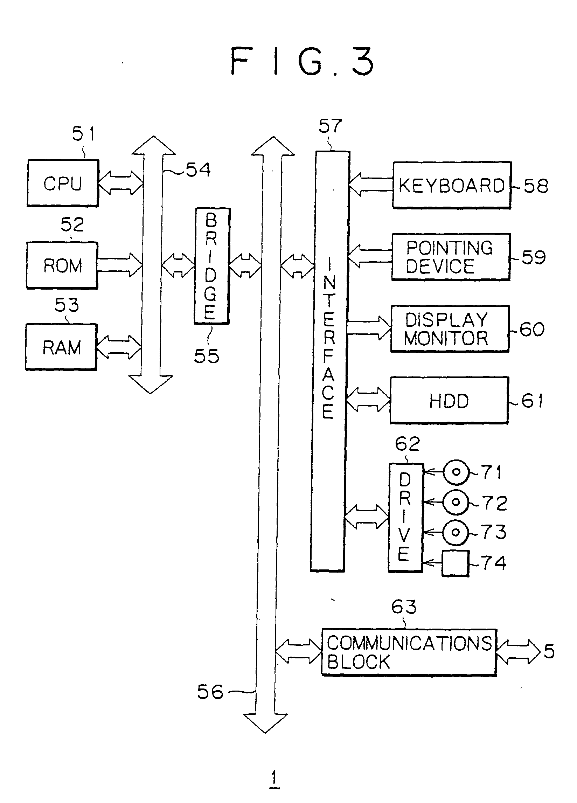

FIG. 3 is a block diagram illustrating a configuration of the personal computer 1. A CPU (Central Processing Unit) 51 actually executes various application programs and an OS (operating System). A ROM (Read Only Memory) 52 generally stores programs and basically fixed data of computational parameters to be used by the CPU 51. A RAM (Random Access Memory) 53 stores programs to be used by the CPU 51 in its execution and parameters which change from time to time in the execution. The CPU 51, ROM 52, and RAM 53 are connected each other by a host bus 54 constructed of a CPU bus, for example.

The host bus 54 is connected to an external bus 56 such as a PCI (Peripheral Component
Interconnect/Interface) via a bridge 55.

A keyboard 58 is operated by the user when inputting commands into the CPU 51. A pointing device 59 is operated by the user when indicating a point on a display monitor 60 or selecting items thereon. The display monitor 60, constituted by a liquid crystal display device or a CRT (Cathode Ray Tube), shows various information in text and image. A HDD (Hard Disk Drive) 61 drives a hard disk to record or read programs and information to be used by the CPU 51 to or from the hard disk.

A drive 62 reads data or programs stored on a magnetic disk 71, an optical disk 72, a magneto-optical disk 73, or a semiconductor memory 74, which is loaded in the drive 62, and supplies the data or programs to the RAM 53 via the interface 57, the external bus 56, the bridge 55, and the host bus 54. These components, the keyboard 58 through the drive 62, are connected to the interface 57 which is connected to the CPU 51 via the external bus 56, the bridge 55, and the host bus 54.

A communications block 63, connected to the Internet 5 via the public line network 4, stores data supplied from the CPU 51 or the HDD 61 into predetermined packets and sends the data and outputs the data stored in received packets to the CPU 51, the RAM 53, or the HDD 61 over the public line network 4 or the Internet 5.

The communications block 63 is connected to the CPU 51 via the external bus 56, the bridge 55, and the host bus 54.

The components, the customer registration server 6 through the questionnaire totalizing terminal unit 22, are similar in configuration to the personal computer 1, so that their descriptions will be skipped.

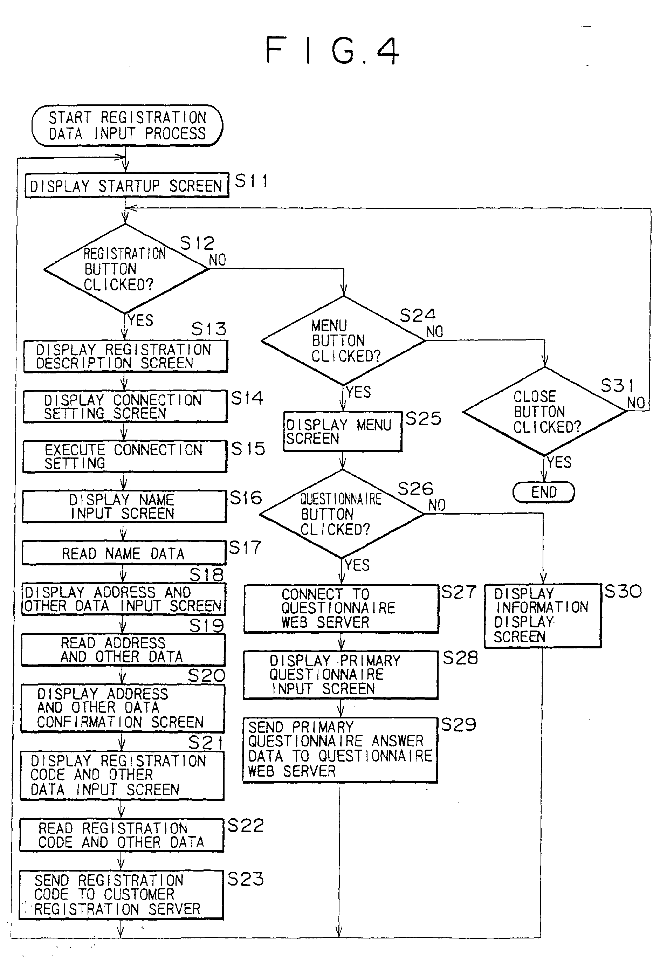

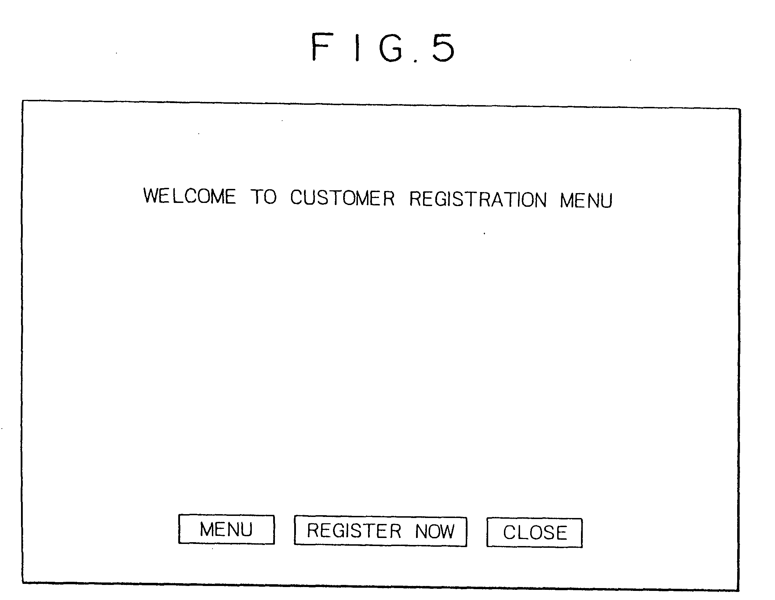

The following describes a registration data input process to be executed by the personal computer 1 which executes the program stored on the registration CD-ROM 3, with reference to the flowchart shown in FIG. 4. In step S11, the registration program displays a startup screen illustratively shown in FIG. 5 onto the display monitor 60. Arranged in the startup screen are a registration button reading "Register Now," a menu button reading "Menu," and a close button reading "Close" for example.

In step S12, the registration program determines, on the basis of the input supplied from the pointing device 59, whether the registration button has been clicked. If the registration button is found clicked, the registration program proceeds to step S13, displaying on the display monitor 60 a registration description screen in which a method of registration for example is shown.

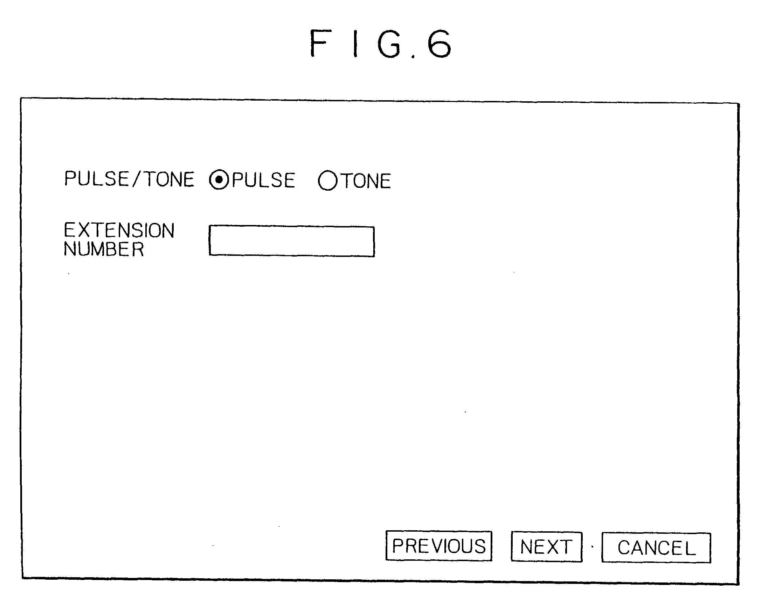

When a button reading "Next" in the registration description screen is clicked, the registration program proceeds to step S14, displaying a connection setting screen illustratively shown in FIG. 6 onto the display monitor 60. Arranged in the connection setting screen are a pulse select button and a tone select button for setting one of the communication modes of the communications block 63. Operating the pointing device 59, the user activates one of the pulse select button and the tone select button.

When "Next" button in the connection setting screen is clicked, then, in step S15, the registration program executes a connection to the communications block 63 on the basis of the settings made in the connection setting screen.

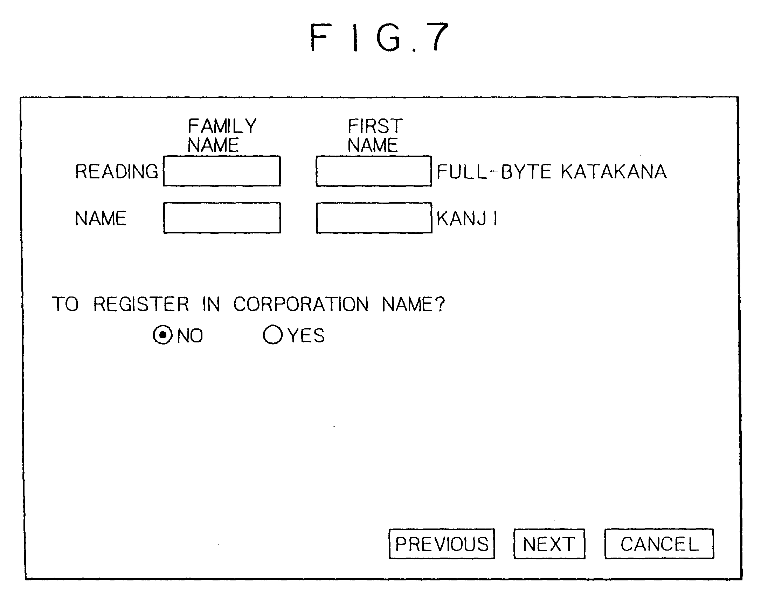

In step S16, the registration program displays a name input screen illustratively shown in FIG. 7 onto the display monitor 60. Arranged in the name input screen are a family name input field and a first name input field for example. When "Next" button in the name input screen is clicked, the registration program proceeds to step S17 and reads the data about the name inputted from the keyboard 58 for example.

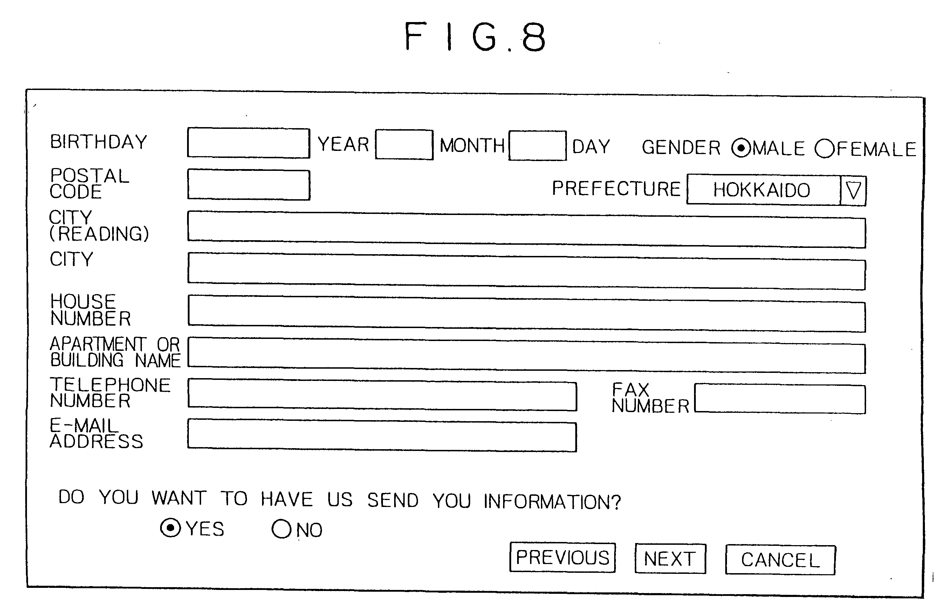

In step S18, the registration program displays an address and other data input screen illustratively shown in FIG. 8 onto the display monitor 60. Arranged in the address and other data input screen are a date of birth field, an address field, and mail address field for example. When "Next" in. the address and other data input screen is clicked, the registration program proceeds to step S19 and reads the data of the date of birth of the user and other data inputted in the entry fields from the keyboard 58 for example.

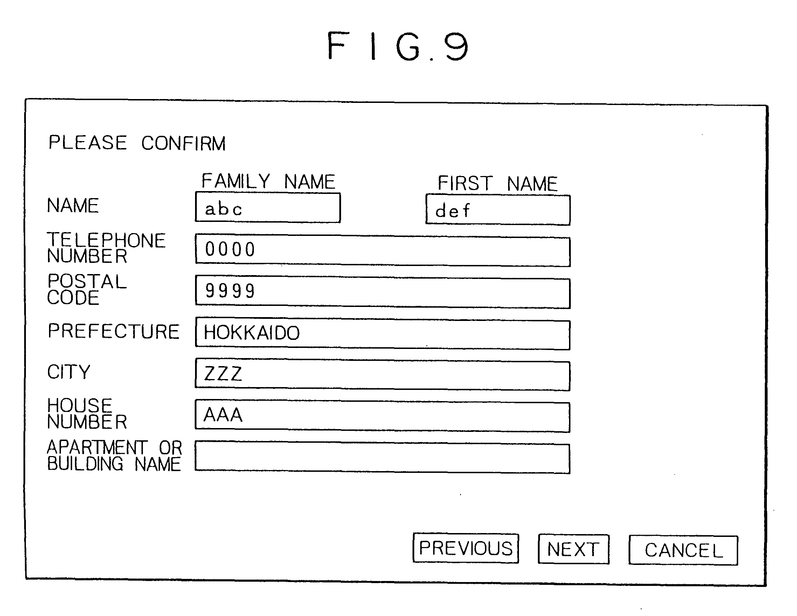

In step 520, the registration program displays an address and other data confirmation screen illustratively shown in FIG. 9 onto the display monitor 60. The address and other data confirmation screen shows the name, address, and so on read in the processes of steps S17 and S19.

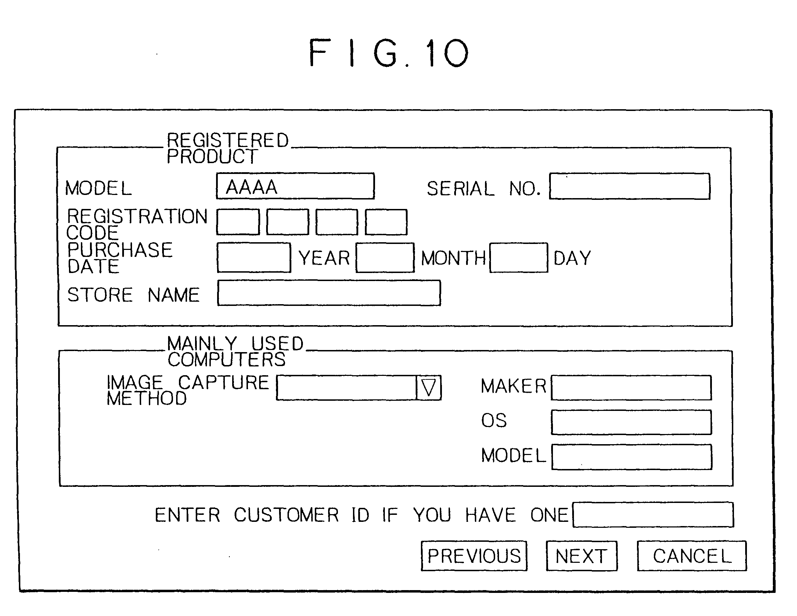

When "Next" button in the address and other data confirmation screen is clicked, the registration program proceeds to step S21 and displays a registration code and other data input screen illustratively shown in FIG. 10. Arranged in the registration code and other data input screen are a registration code input field and a purchase date input field for example. A registration code is one written on the registration card packaged with the imaging digital video cassette recorder 2 and unique to each imaging digital video cassette recorder 2. Each registration code consists of 16 alphabetic and/or numeric characters having a value for identifying the model name of the imaging digital video cassette recorder 2.

When "Next" button in the registration code and other data input screen is clicked, the registration program proceeds to step S22 and reads the data of the registration code for example inputted in the registration code and other data input screen from the keyboard 58 for example.

In step S23, the registration program sends the name data read in step S17, the address and other data read in step S19, and the registration code and other data read in step S22 to the customer registration server 6 as the registration data and then returns to step S11 to repeat the processes starting with the displaying of the startup screen.

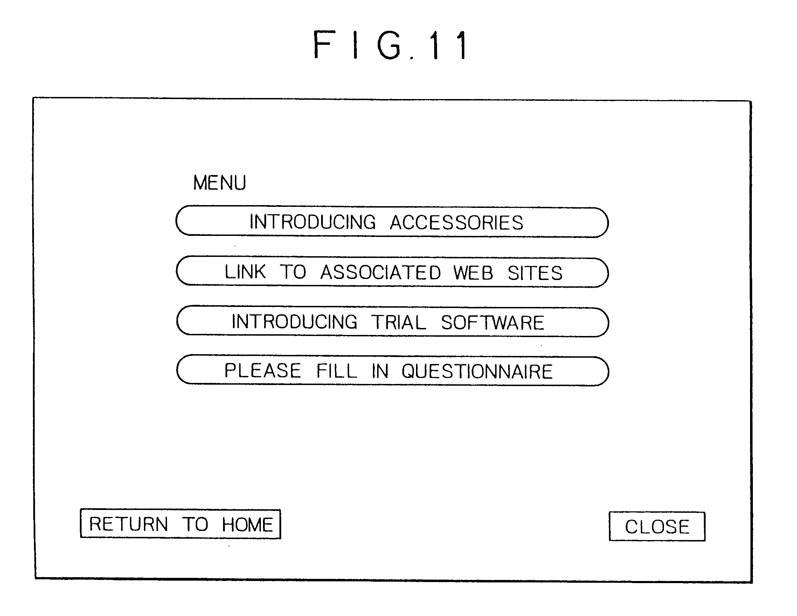

If the registration button is found not clicked in step S12, the registration program proceeds to step S24 and determines, on the basis of the input from the pointing device 59 whether the menu button has been clicked or not. If the menu button is found clicked, then the registration program proceeds to step S25 and displays a menu screen illustratively shown in FIG. 11 onto the display monitor 60.

Arranged in the menu screen are a button for displaying an information display screen and a questionnaire button reading "Please fill in questionnaire" for example.

In step S26, on the basis of the input from the pointing device 59, the registration program determines whether the questionnaire button has been clicked or not. If the questionnaire button is found clicked, then the registration program proceeds to step S27 and connects the personal computer 1 to the questionnaire Web server 7-2 via the customer registration server 6 and the Internet 5.

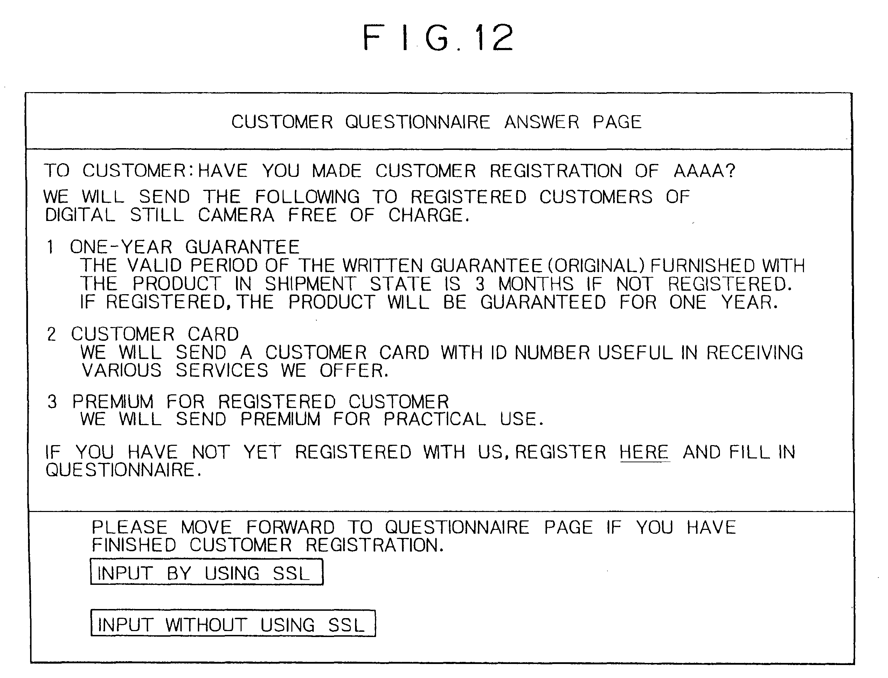

In step S28, the registration program receives from the Web server 7-2 the data for displaying the questionnaire input screens illustratively shown in FIGS. 12 through 14 and displays these questionnaire input screens on the display monitor 60. When displaying the questionnaire input screens in step S28, the registration program automatically sets the items included in the registration data sent in step S23 into the fields of the questionnaire input screens.

The questionnaire input screen shown in FIG. 12 contains a button for setting SSL (Secure Socket Layer). This screen is displayed when the personal computer 1 is connected to the questionnaire Web server 7-2.

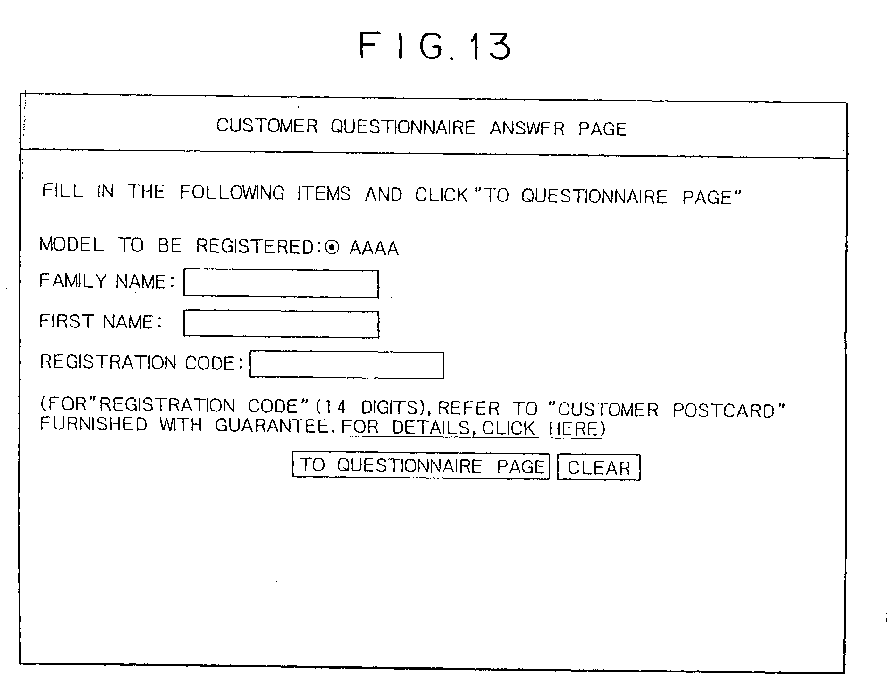

Arranged in the questionnaire input screen shown in FIG. 13 are name and registration code input fields for example, this questionnaire input screen being displayed following the questionnaire input screen shown in FIG. 12.

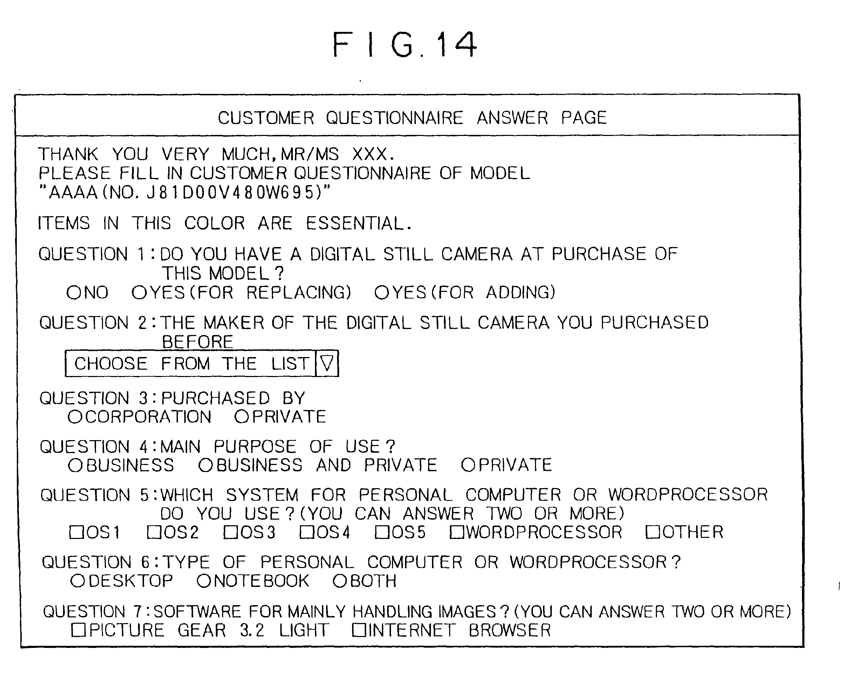

The questionnaire input screen shown in FIG. 14, displayed -following the questionnaire input screen shown in FIG. 13, is used to input the replies to the questionnaire of products currently owned by user, their purposes of usage, and application programs owned by the user for example.

In step S29, the registration program sends the data inputted for the questionnaires set to the questionnaire input screens to the questionnaire Web server 7-2 and then returns to step S11 to repeat the processes from the startup screen displaying process.

If, in step S26, the questionnaire button has not been clicked, it indicates that the button for displaying the information display screen shown in FIG. 11 has been clicked. The registration program then proceeds to step S30 to display the information display screen on the display monitor 60 and returns to step S11 to repeat the processes from the startup screen displaying process.

If, in step S24, the menu button has not been clicked, then the registration program proceeds to step S31 and, on the basis of the input from the pointing device 59, determines whether the close button has been clicked. If the close button is found not clicked, then the registration program returns to step S12 to repeat the determination process.

If the close button is found clicked in step S31, the registration processing comes to an end.

Thus, the registration program sends the registration data inputted by the user to the customer registration server 6 and, at the same time, sends the questionnaire answer data to the Web server 7-2.

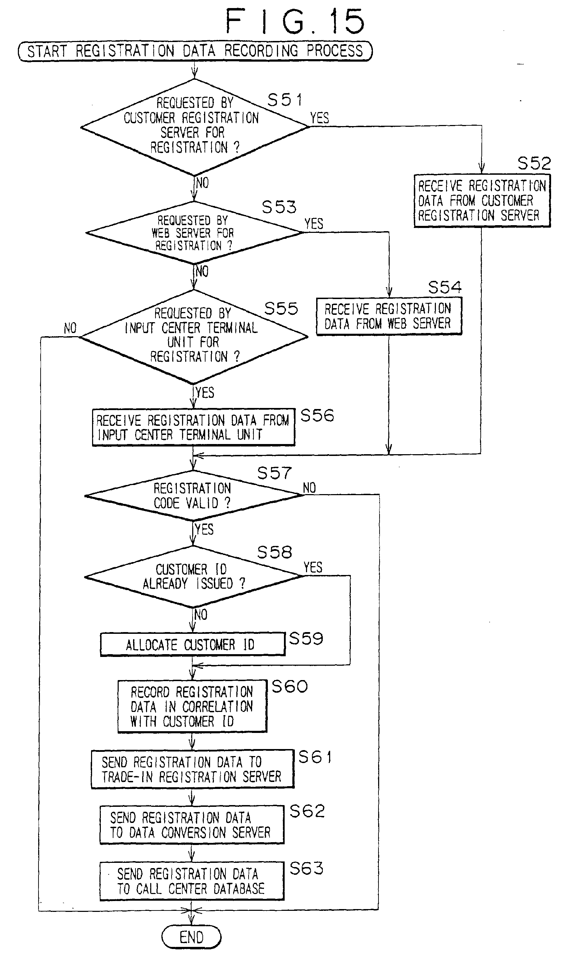

The following describes a registration data recording process to be executed by the customer database 10 with reference to the flowchart shown in FIG. 15. In step S51, on the basis of a signal inputted from the customer registration server 6, the customer database 10 determines whether a registration request has been made by the customer registration server 6. If a registration request is found made by the customer registration server 6, the customer database 10 proceeds to step S52 to receive the registration data from the customer registration server 6 and then proceeds to step S57.

If, in step S51, no registration request is found from the customer registration server 6, then the customer database 10 proceeds to step 53 and, on the basis of a signal inputted from the Web server 7-1, determines whether a registration quest has been made by the Web server 7-1. If, in step S53, a registration request is found made by the Web server 7-1, then the customer database 10 proceeds to step S54 to receive the registration data from the Web server 7-1 and then proceeds to step S57.

If, in step S53, no registration request by the Web server 7-1 is found, then the customer database 10 proceeds to step S55 and determines, on the basis of a signal inputted from the input center terminal unit 9, whether a registration request has been made by the input center terminal unit 9. If, in step S55, a registration request is found made by the input center terminal unit 9, then the customer database proceeds to step S56 to receive the registration data from the input center terminal unit 9 and then proceeds to step S57.

If, in step S55, no registration request is found from the input center terminal unit 9, it indicates that none of the customer registration server 6, the Web server 7-1, and the input center terminal unit 9 has made a registration request. Therefore, the registration data recording process comes to an end.

In step S57, the customer database 10 determines whether or not the registration code included in the received registration data is correct (by checking the number of digits, for example). If the registration code is found correct, the customer database 10 proceeds to step S58 to search, on the basis of the name and so on included in the received registration data, for the registration data recorded in the customer database 10, determining whether a customer ID has already been issued to the user corresponding to the retrieved registration data.

If, in step S58, no customer ID is found issued to the user, then the customer database 10 proceeds to step S59 to request the ID/password issue server 11 for the issuance of a password and customer ID, receive the password and customer ID issued by the ID/password issue server 11, and allocate the received customer ID to the user corresponding to the above-mentioned retrieved registration data.

The customer ID allocated to the user is notified to the user by postal-mailing the registration card containing that customer ID to the user.

If, in step S58, a customer ID is found already issued to the user corresponding to the retrieved registration data, the customer ID allocating process is not required and therefore step S58 is skipped, upon which the customer database 10 proceeds to step S60.

In step S60, the customer database 10 records, in correlation with the customer ID, the registration data received in step S52, S54, or S56.

In step S61, the customer database 10 sends the registration data recorded in step S60 to the trade-in registration server 17. In step S62, the customer database 10 sends the registration data recorded in step S60 to the data conversion server 12. In step S63, the customer database 10 sends the registration data recorded in step S60 to the call center database 14, upon which the registration data recording process comes to an end.

If, in step S57, the registration code is found incorrect, the customer database 10 determines that the registration data received in step S52, S54, or S56 are noncompliant and discards the registration data without registering them, upon which the registration data recording process comes to an end.

Thus, the customer database 10 records the registration data supplied from one of the customer registration server 6, the Web server 7-1, and the input center terminal unit 9.

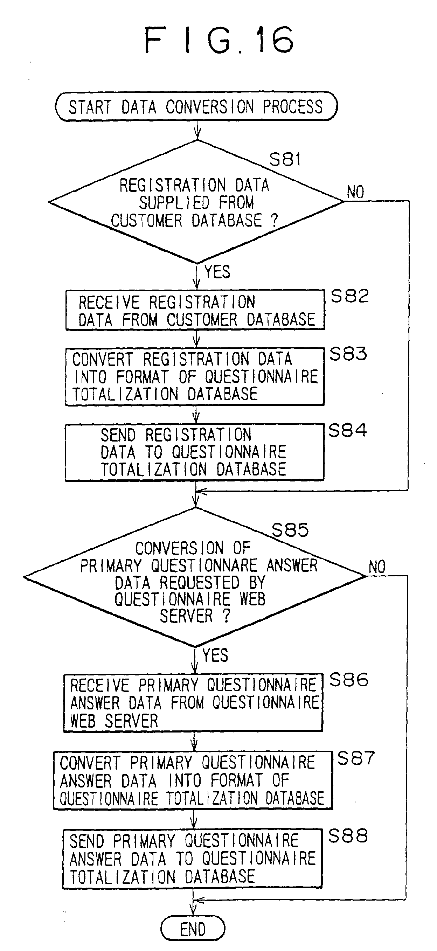

The following describes a data conversion process to be executed by the data conversion server 12 with reference to the flowchart shown in FIG. 16. In step S81, the data conversion server 12 determines, on the basis of a signal inputted from the customer database 10, whether or not registration data have been sent from the customer database 10. If the registration data have been sent from the customer database 10, then the data conversion procedure proceeds to step S82 to receive the registration data sent by the customer database 10 in step S62.

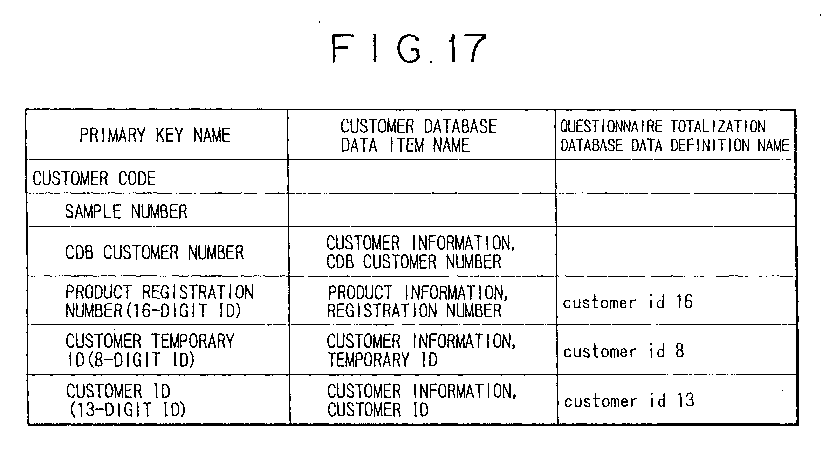

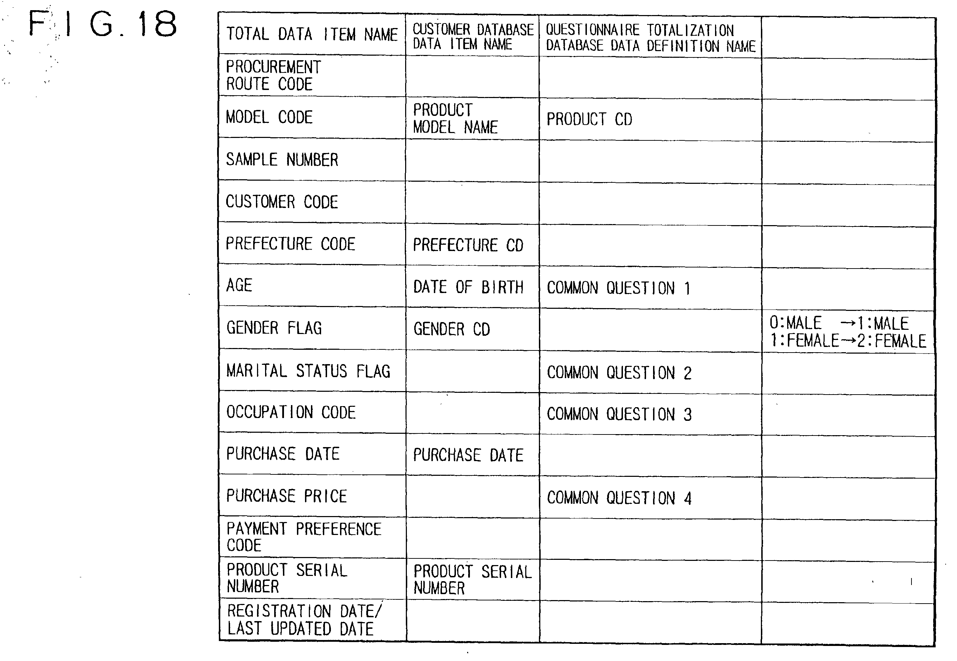

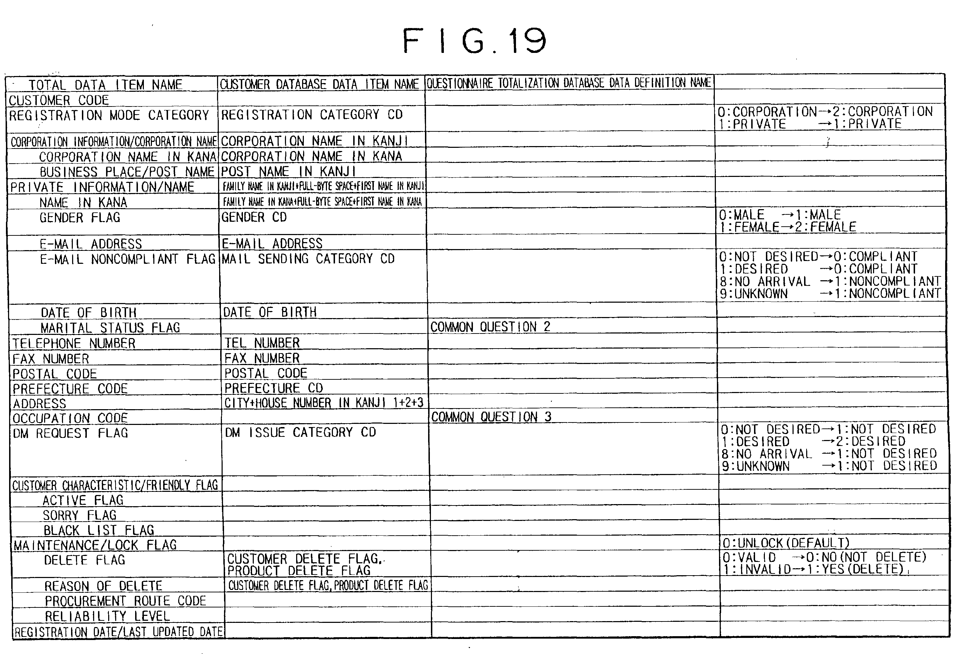

In step S83, the data conversion server 12 converts the format of the registration data received in step S82 into the format of the questionnaire totalization database 13 by use of an association data conversion table illustratively shown in FIG. 17, a header conversion table illustratively shown in FIG. 18, and a master conversion table illustratively shown in FIG. 19.

The association data conversion table, recorded in the data conversion server 12 in advance, contains the correlation data for generating the association data composed of a customer number for identifying a customer and a product registration number on the basis of a customer ID. On the basis of the association data, the customer database 10 and the questionnaire totalization database 13 can know the association between the registration data and the questionnaire answer data recorded therein, namely between users and questionnaire replies.

The header conversion table, recorded in the data conversion server 12 in advance, lists the data (for converting model code and gender flag conversion data for example) for generating the data to be recorded in the headers (mainly, the data attached to records for their search) of the records (the units of data corresponding to different users) in the questionnaire totalization database 13 on the basis of the registration data.

The master conversion table, recorded in the data conversion server 12 in advance, lists the data (for example, those corresponding to corporation names or personal names or to telephone numbers) for generating the data to be recorded in the items (the units of data included in each record) of the records in the questionnaire totalization database 13 on the basis of the registration data.

In step S84, the data conversion server 12 sends to the questionnaire totalization database 13 the registration data composed of the association data, the data recorded in the headers, and the data recorded in the items, all converted in step S83.

If, in step S81, the registration data is not found supplied from the customer database 10, it is not necessary to execute the conversion of the registration data. Therefore, steps S82 through S84 are skipped. The data conversion procedure proceeds to step S85.

In step S85, on the basis of a signal inputted from the Web server 7-2, the data conversion server 12 determines whether a request for converting primary questionnaire answer data has been made by the questionnaire Web server 7-2. If the request is found made by the Web server 7-2, then the data conversion procedure proceeds to step S86, in which the data conversion server 12 receives the primary questionnaire answer data from the questionnaire Web server 7-2.

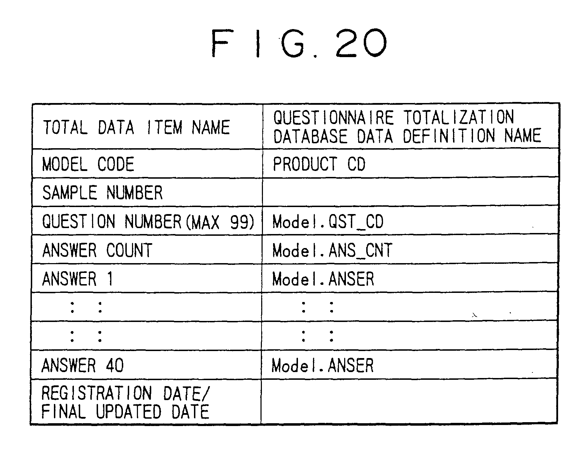

In step S87, on the basis of a questionnaire data conversion table shown in FIG. 20, the data conversion server 12 converts format of the primary questionnaire answer data into the format of the questionnaire totalization database 13.

The questionnaire data conversion table, recorded in the data conversion server 12 in advance, lists the correlations between the primary questionnaire answer data and the data definition names in the questionnaire totalization database 13.

In step S88, the data conversion server 12 sends the primary questionnaire answer data converted in step S87 to the questionnaire totalization database 13, upon which this processing comes to an end.

If, in step S85, no request for primary questionnaire answer data is found made by the Web server 7-2, it is not necessary to make the conversion and therefore this processing comes to an end.

Thus, the data conversion server 12 can convert the formats of the registration data and the primary questionnaire answer data and send the resultant data to the questionnaire totalization database 13.

It should be noted that the data conversion server 12 also converts secondary questionnaire answer data in the same manner as the primary questionnaire answer data and sends the converted data to the questionnaire totalization database 13, so that the process of the secondary questionnaire answer data conversion will not be detailed.

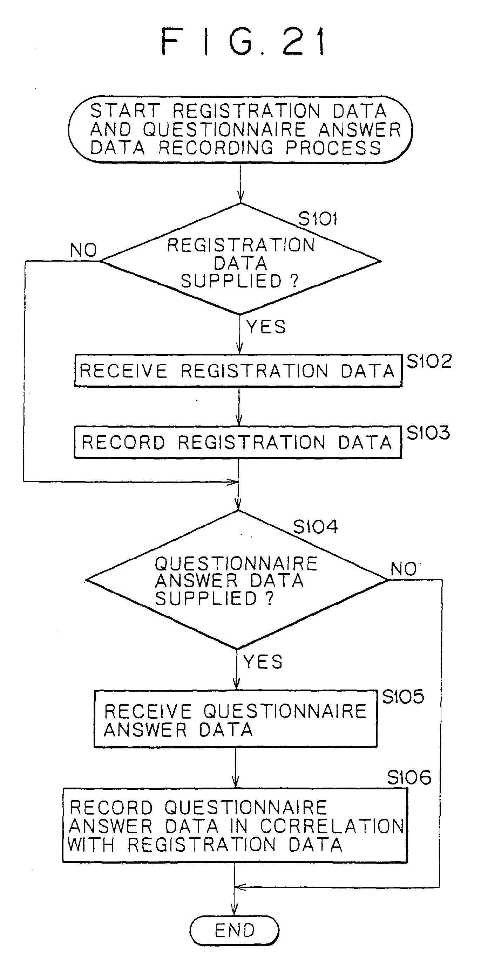

The following describes a registration data and questionnaire answer data recording process to be executed by the questionnaire totalization database 13 with reference to the flowchart shown in FIG. 21. In step S101, on the basis of the signal inputted from the data conversion server 12, the questionnaire totalization database 13 determines whether or not registration data have been supplied from the data conversion server 12. If the registration data are found supplied from the data conversion server 12, the procedure proceeds to step S102, in which the questionnaire totalization database 13 receives the registration data supplied from the data conversion server 12. In step S103, the questionnaire totalization database 13 records the registration data received in step S102.

If, in step S101, no registration data are found supplied from the data conversion server 12, it is not necessary to receive and record the registration data, so that the processes of steps S102 and S103 are skipped, the procedure proceeding to step S104.

In step S104, on the basis of the signal inputted from the data conversion server 12, the questionnaire totalization database 13 determines whether questionnaire answer data have been supplied from the data conversion server 12. If the questionnaire answer data are found supplied from the data conversion server 12, then the procedure proceeds to step S105, in which the questionnaire totalization database 13 receives the questionnaire answer data from the data conversion server 12. In step S106, the questionnaire totalization database 13 records, in correlation with the recorded registration data, the questionnaire answer data received in step S105, upon which this processing comes to an end.

If, in step S104, no questionnaire answer data is found supplied from the data conversion server 12, it is not necessary to receive and record the questionnaire answer data, so that the processes of steps S105 and S106 are skipped, upon which this processing comes to an end.

Thus, the questionnaire totalization database 13 can record the registration data and the questionnaire answer data in an associated manner.

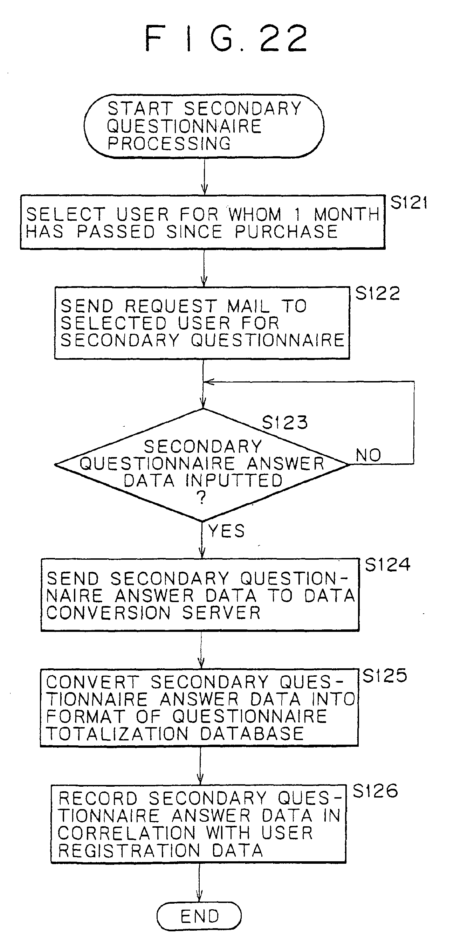

The following describes how a secondary questionnaire, which is sent to the user of a product one month after its purchase for example is processed, with reference to the flowchart shown in FIG. 22. In step S121, on the basis of the recorded registration data, the questionnaire totalization database 13 selects the users for whom one month has passed since their purchasing the products. In step S122, the questionnaire totalization database 13 makes the mail server 8 send a secondary questionnaire request mail to each of the selected users. This mail asks the user to access the Web server 7-2 to make an answer to the secondary questionnaire.

In step S123, the Web server 7-2 determines whether the secondary questionnaire answer data has been inputted or not. If the data of the answer to the secondary questionnaire is found not inputted, then the procedure returns to step S123 to repeat the above-mentioned processes until the secondary questionnaire answer data is inputted.

It should be noted that if, in step S123, the secondary questionnaire answer data is not found inputted, the procedure may return to step S121 to send a questionnaire request mail to another user.

If, in step S123, the secondary questionnaire answer data is found inputted, the procedure proceeds to step S124, in which the Web server 7-2 sends the secondary questionnaire answer data to the data conversion server 12. In step S125, the data conversion server 12 converts the format of the received secondary questionnaire answer data into the format of the questionnaire totalization database 13 in the same manner as that described with reference to the flowchart shown in FIG. 16 and supplies the resultant data to the questionnaire totalization database 13. In step S126, the questionnaire totalization database 13 records the received secondary questionnaire answer data in correlation with the recorded registration data, upon which this processing comes to an end.

Thus, the customer data management system can record the answer data for the questionnaires addressed to those users for whom one month has passed since their purchasing of the products. It will be apparent to those skilled in the art that the secondary questionnaire may be send not only one month after but also six months or twelve months after purchase. Moreover, the users to whom the secondary questionnaire is to be sent may be selected in terms of not only elapsed periods but also product categories (for example, digital still camera and digital video cassette recorder), particular models, users who have made any inquiry, or a combination thereof.

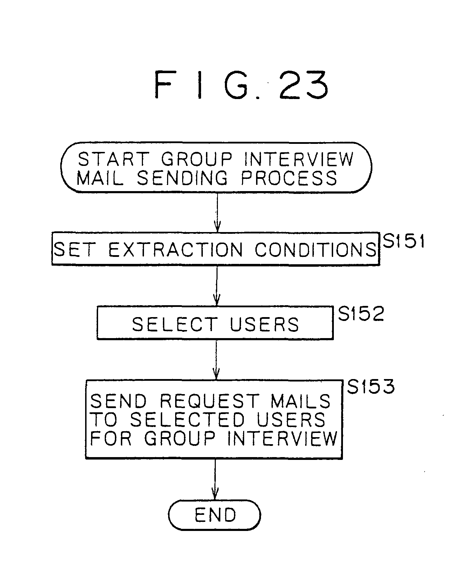

The following describes a process of sending a group interview mail to be executed by the questionnaire totalization database 13 with reference to the flowchart shown in FIG. 23. In step S151, the questionnaire totalization database 13 sets the conditions for extracting users to be interviewed. The extraction conditions may include whether the user lives in a metropolitan area, owns a personal computer, has made one or more inquiries, and is 30 years old and owns particular products, for example. The extraction conditions may also include whether the distribution of gender and age of a set of the users to be extracted match the distribution of gender and age of a set of the owners of subject products.

In step S152, on the basis of the extraction conditions set in step S151, the questionnaire totalization database 13 selects users whose registration data are recorded. In step S153, the questionnaire totalization database 13 makes the mail server 8 send a group interview request mail to each of the selected users, upon which this processing comes to an end.

Thus, the questionnaire totalization database 13 can send group interview request mails to the users who satisfy the predetermined conditions.

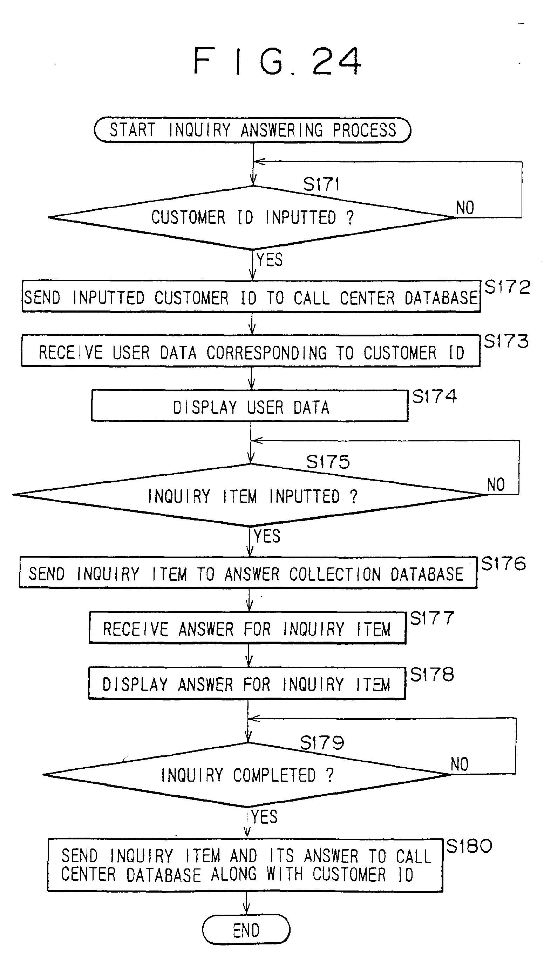

The following describes an inquiry answering process to be executed by the call center terminal unit 19, the call center database 14, and the answer collection database 15 in the call center which accepts inquiries by telephone, with reference to the flowchart shown in FIG. 24. In step S171, in response to an inquiry by telephone, the call center terminal unit 19 determines whether the customer ID has been inputted by an operator of the call center. If no customer ID is found inputted, it indicates that the call center is waiting for an inquiry by telephone, so that the procedure returns to step S171 to repeat the determination whether a customer ID has been inputted or not.

If, in step S171, a customer ID is found inputted, it indicates that an inquiry by telephone has been made, so that the procedure proceeds to step S172, in which the call center terminal unit 19 sends the inputted customer ID to the call center database 14. The operator of the call center learns the customer ID from the customer when his inquiry has come.

Receiving the customer ID, the call center database 14 sends the data including the registration data associated with the user having the received customer ID (for example, the registration data such as customer ID, address, name, and telephone number and the questionnaire answer data such as purchase history, repair history, and the degree of preference for manufacturer or seller of the product concerned) to the call center terminal unit 19.

In step S173, the call center terminal unit 19 receives the data about the user having the customer ID supplied from the call center database 14. In step S174, the call center terminal unit 19 displays the user data on the monitor display of the call center terminal unit.

Looking up the user data (for example, the registration data such as customer ID, address, name, and telephone number and the questionnaire answer data such as purchase history, repair history, and the degree of preference for manufacturer or seller of the product concerned) displayed on the call center terminal unit 19, the operator of the call center makes responses to user inquiries.

In step S175, the call center terminal unit 19 determines whether the item (for example, an inquiry for how to use the product, an inquiry for the availability of accessories of the product, or a request for troubleshooting) of an inquiry by telephone has been inputted by the operator of the call center. If the item is found not inputted, it indicates that the operator of the call center is asking the user for the contents of the inquiry, so that the procedure goes back to step S175 to repeat the determination whether any inquiry item has been inputted or not.

If, in step S175, the inquiry item is found inputted, the procedure goes to step S176, in which the call center terminal unit 19 sends the received inquiry item to the answer collection database 15. Receiving the inquiry item, the answer collection database 15 sends an answer to the inquiry item to the call center terminal unit 19 and increments the inquiry count which is recorded for the answer made.

If the answer to the inquiry item is not recorded, the answer collection database 15 sends a message about no answer to the call center terminal unit 19 and records the received inquiry item.

In step S177, the call center terminal unit 19 receives the answer to the inquiry item supplied from the answer collection database 15. In step S178, the call center terminal unit 19 displays the answer to the inquiry item onto its display monitor for example.

Looking up the answer to the inquiry item displayed on the call center terminal unit 19, the operator of the call center makes a response to the inquiry.

In step S179, the call center terminal unit 19 determines on the basis of the operation done by the operator of the call center whether the inquiry has been processed. If the inquiry is found not yet fully processed, it indicates that the operator is still responding to the inquiry, so that the procedure goes back to step S179 to repeat the determination process.

If, in step S179, the inquiry is found completed, then the procedure goes to step S180, in which the inquiry item and its answer are sent to the call center database 14 along with the customer ID. The call center database 14 records the received inquiry item and its answer in correlation with the registration data, upon which the processing comes to an end. Thus, the operator of the call center makes answers to user inquiries by looking up the answers to user inquiry items displayed on the call center terminal unit 19, so that the operator of the call center can always give appropriate answers without fluctuations in the contents of answers among the operators.

Also, the answer collection database 15 can record the number of times inquiries are made for each inquiry item. The call center database 14 can record the number of times each user has made an inquiry and the items of inquiries made by each user.

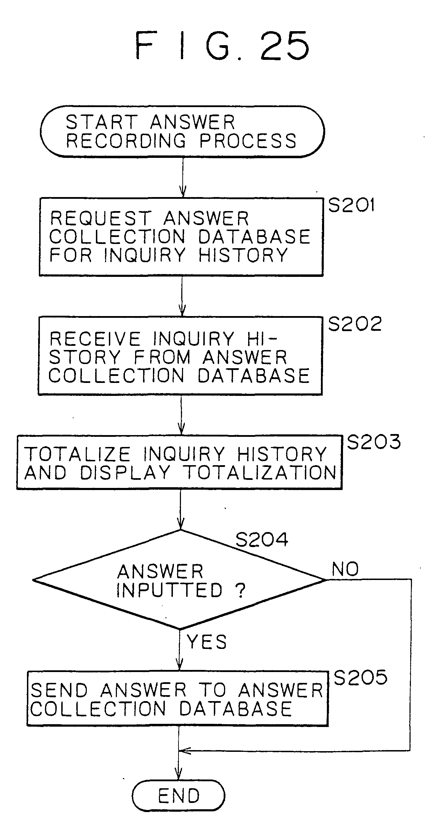

The following describes an answer recording process to be executed by the call totalization/answer setting terminal unit 21 with reference to the flowchart shown in FIG. 25. In step S201, the call totalization/answer setting terminal unit 21 requests the answer collection database 15 to send an inquiry history composed of inquiry items and the number of times these inquiries have been made. The answer collection database sends the requested inquiry history to the call totalization/answer setting terminal unit 21.

In step S202, the call totalization/answer setting terminal unit 21 receives the inquiry history composed of inquiry items and the number of times these inquiries have been made. In step S203, the call totalization/answer setting terminal unit 21 totalizes the inquiry history received in step S202 by arranging the inquiry items for which no answer is set with reference to each inquiry count or with reference to inquiry time durations for example and displays the resultant totalization.

On the basis of the displayed inquiry history, the operator of the call totalization/answer setting terminal unit 21 can input new answers or modified answers in association with the inquiry items.

In step S204, the call totalization/answer setting terminal unit 21 determines whether an answer to the inquiry item has been inputted by the operator of the call totalization/answer setting terminal unit 21. If an answer is found inputted, then the procedure goes to step S205, in which the inputted answer is set to the answer collection database 15. The answer collection database 15 receives the answer supplied from the call totalization/answer setting terminal unit 21 and records the received answer in association with the inquiry item, upon which the recording processing comes to an end.

If, in step S204, no answer to the inquiry item is found, there is no need for recording answers, so that the recording processing comes to an end.

Thus, when the operator of the call totalization/answer setting terminal unit 21 inputs new or modified answers in association with inquiry items on the basis of the displayed inquiry histories, the answer collection database 15 can record the inputted answers.

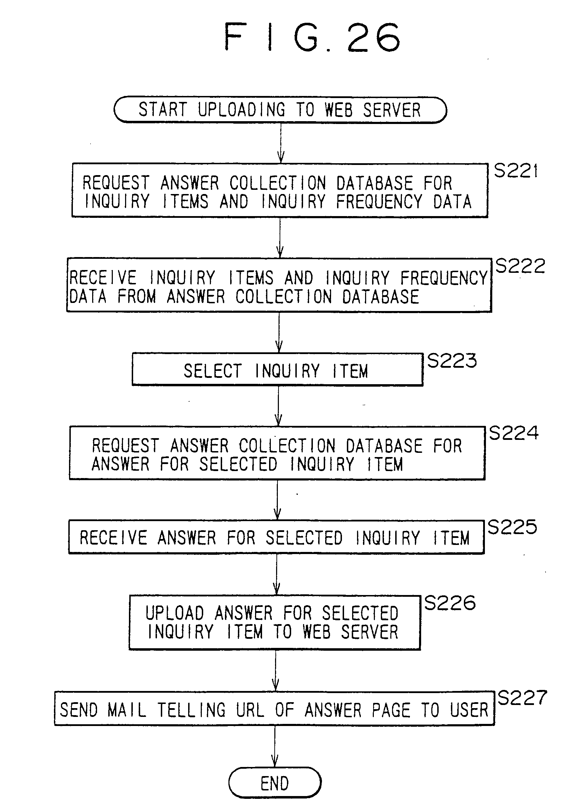

The following describes a process of uploading answers to frequently inquired items to the Web server 7-1 with reference to the flowchart shown in FIG. 26. In step S221, the customer support server 20 requests the answer collection database 15 for the data composed of inquiry items and the frequencies of these inquiries (namely the number of times an inquiry was made during a predetermined period of time). In response to the request by the customer support server 20, the answer collection database 15 sends the requested data composed of inquiry items and the frequencies of these inquiries to the customer support server 20.

In step S222, the customer support server 20 receives the data composed of inquiry items and the frequencies of these inquiries from the answer collection database 15. In step S223, the customer support server 20 selects an inquiry item having an inquiry frequency exceeding a predetermined threshold.

In step S224, the customer support server 20 requests the answer collection database 15 for the answer to the inquiry item selected in step S223. In response to the request by the customer support server 20, the answer collection database 15 sends the answer to the selected inquiry item to the customer support server 20.

In step S225, the customer support server 20 receives the answer to the selected inquiry item from the answer collection database 15. In step S226, the customer support server 20 uploads the answer to the inquiry item to the Web server 7-1 (namely, the answer is placed so as to be accessed via the Internet 5). In step S227, the customer support server 20 makes the mail server 8 send to the user a mail notifying the user of the URL of the Web page on which the answer is placed.

Thus, the customer support server 20 can select the answers to frequently inquired items, uploads the selected answers to the Web server 7-1, and notify the user thereof.

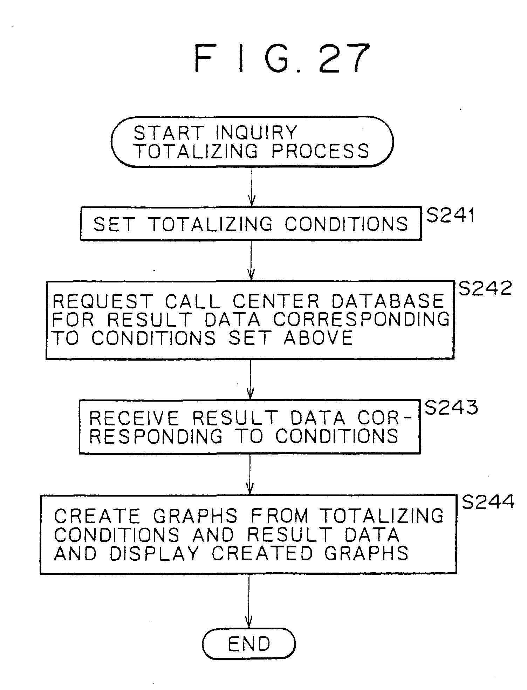

The following describes a process of totalizing inquires to be executed by the call totalization/answer setting terminal unit 21 with reference to the flowchart shown in FIG. 27. In step S241, the call totalization/answer setting terminal unit 21 sets the totalizing conditions such as the inquiry count for each product model and inquiry item by category on the basis of the inputs performed by the operator of the call totalization/answer setting terminal unit 21.

In step S242, the call totalization/answer setting terminal unit 21 requests the call center database 14 for the result data such as the inquiry count for each product model for example that correspond to the conditions set in step S241. In response to the request by the call totalization/answer setting terminal unit 21, the call center database 14 sends the result data corresponding to these conditions to the call totalization/answer setting terminal unit 21.

In step S243, the call totalization/answer setting terminal unit 21 receives the result data corresponding to the conditions supplied from the call center database 14. In step S244, on the basis of the totalizing conditions and the received result data, the call totalization/answer setting terminal unit 21 creates graphs and display them, upon which the totalization processing comes to an end.

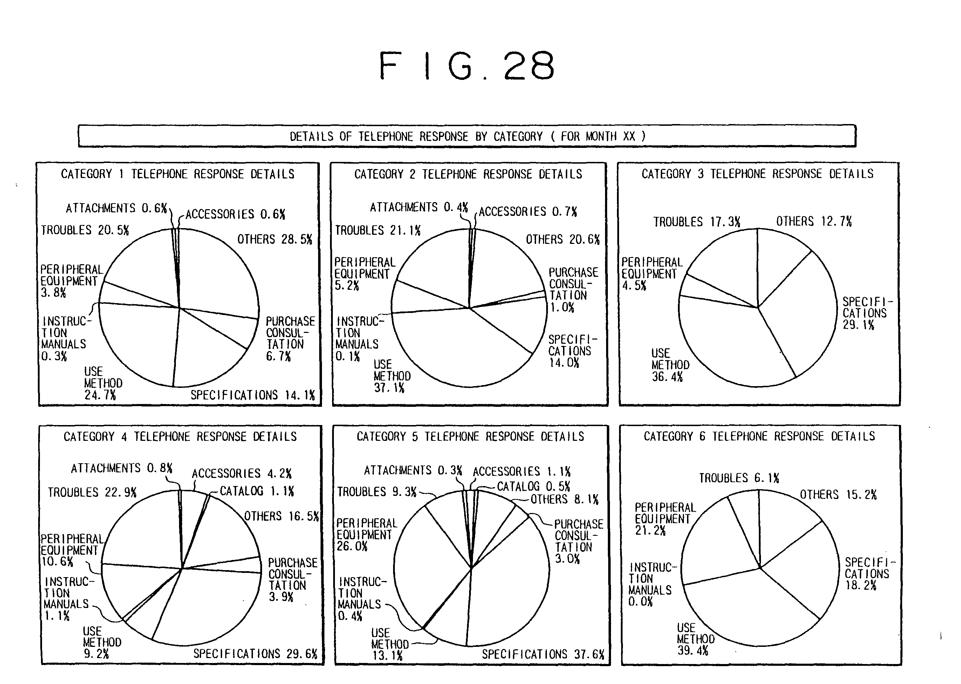

The exemplary graphs displayed by the call totalization/answer setting terminal unit 21 in step S243 are shown in FIGS. 28 through 31.

The graphs shown in FIG. 28 represent the ratios of the number of inquires to each inquiry item classified by category (for example, imaging video cassette recorder, digital video cassette recorder, and digital still camera).

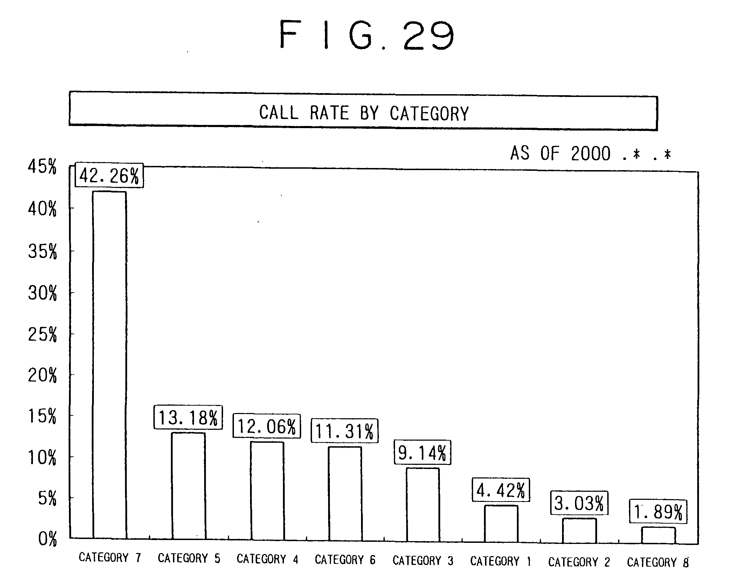

The graphs shown in FIG. 29 represent the ratio of the number of inquiries to categories.

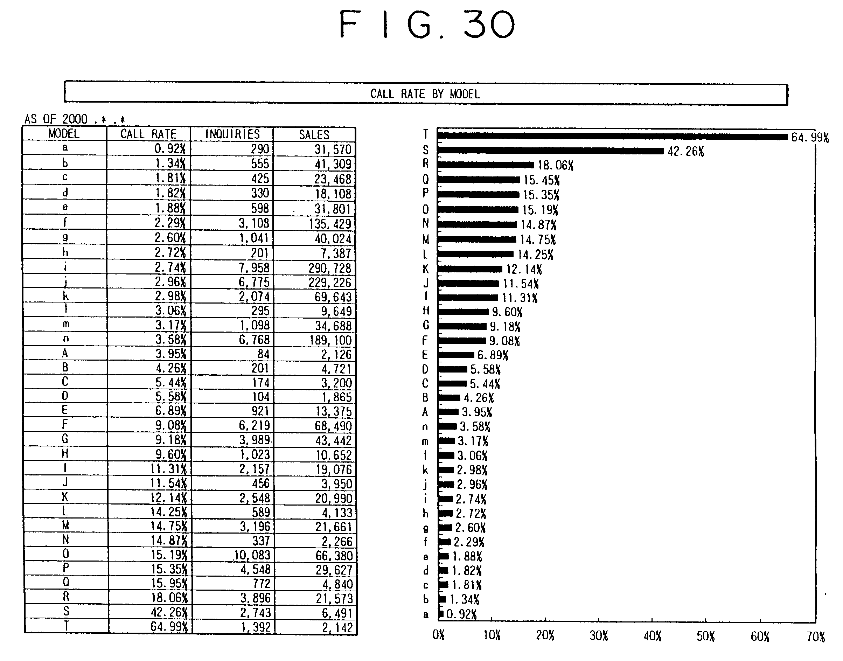

The graphs shown in FIG. 30 represent the ratio of the number of inquiries to the number of products sold as classified by category.

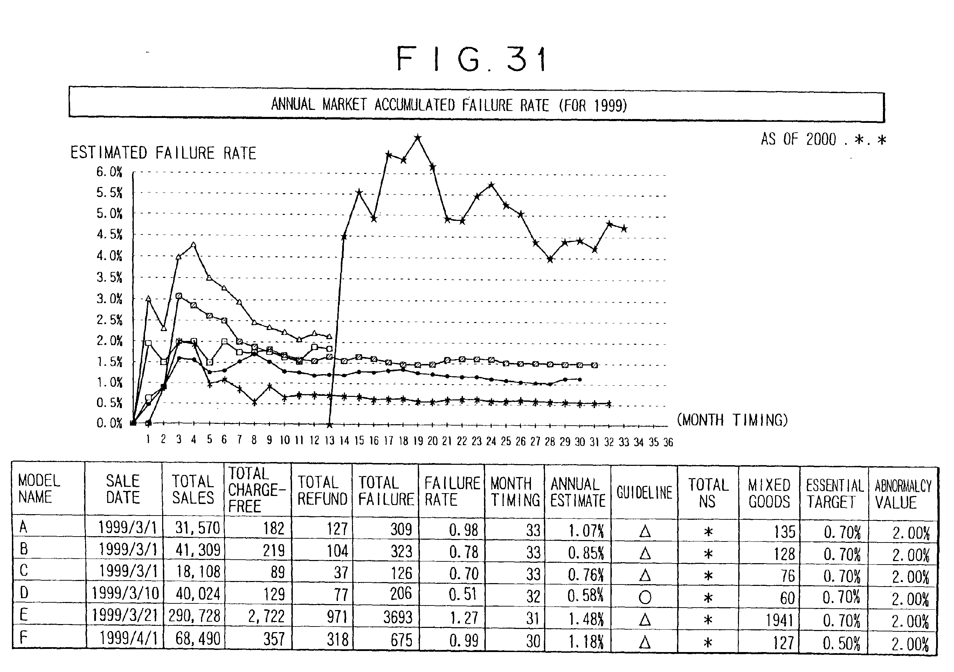

The graphs shown in FIG. 31 represent the changes in the estimated failure rates for each monthly timing (beginning, middle, and end of each month) calculated as the ratio of the number of trouble inquiries to the number of products sold for each product model.

These graphs (for example, the inquiry ratio for each product model, the contents of inquiries, troubleshooting status, improvements, and requests) displayed by the call totalization/answer setting terminal unit 21 facilitate the execution of product design, sale planning, and product planning jobs.

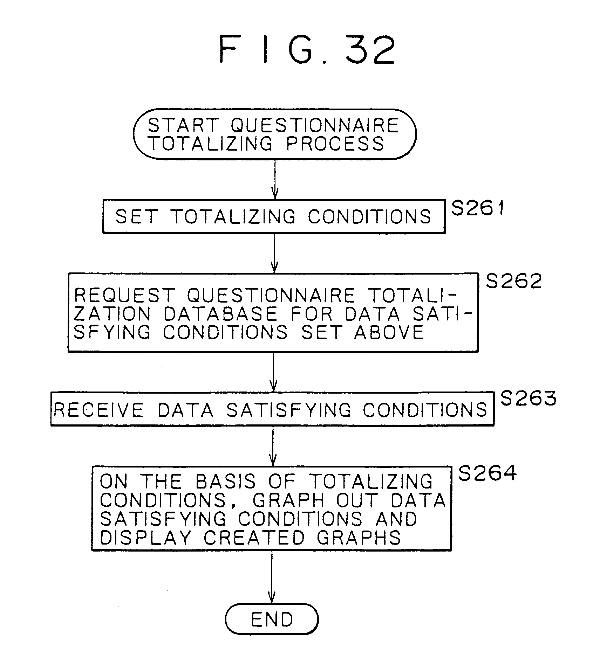

The following describes a process of totalizing questionnaires to be executed by the questionnaire totalizing terminal unit 22 with reference to the flowchart shown in FIG. 32. In step S261, the questionnaire totalizing terminal unit 22 sets the totalizing conditions such as purchase motives by product model and purpose of use for example on the basis of the inputs performed by the operator of the questionnaire totalizing terminal unit 22.

In step S262, the questionnaire totalizing terminal unit 22 requests the questionnaire totalization database 13 for the data composed of the questionnaire answer data such as purchase motives by product model and purpose of use corresponding to the conditions set in step S261. In response to the request from the questionnaire totalizing terminal unit 22, the questionnaire totalization database 13 sends the data corresponding to these conditions to the questionnaire totalizing terminal unit 22.

In step S263, the questionnaire totalizing terminal unit 22 receives the data corresponding to the conditions supplied from the questionnaire totalization database 13. In step S264, the questionnaire totalizing terminal unit 22 creates graphs on the basis of the totalizing conditions and the received data and displays the created graphs, upon which the totalizing processing comes to an end.

These graphs, created on the basis of the totalizing conditions and the received data and displayed by the questionnaire totalizing terminal unit 22, facilitate the execution of product design, sale planning, and product planning jobs.

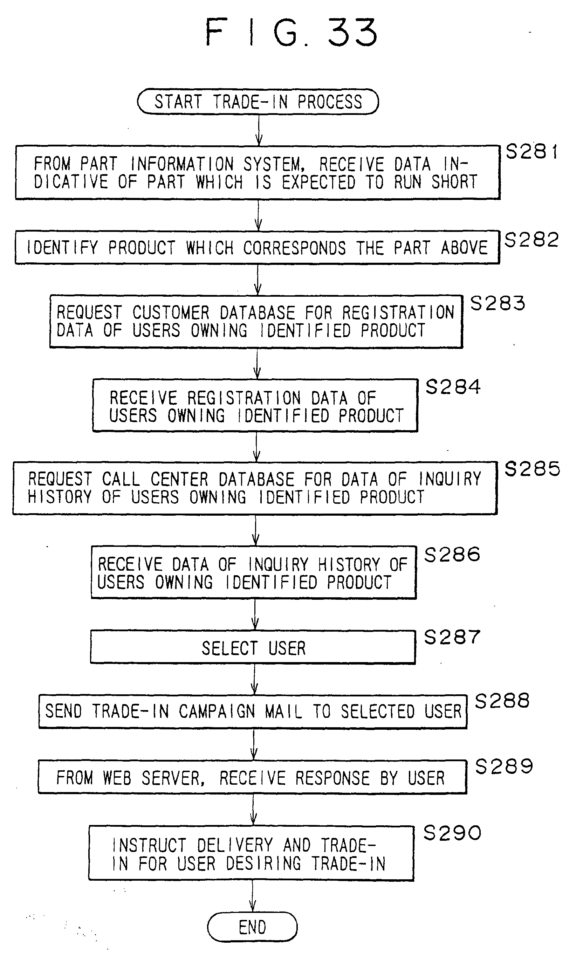

The following describes a trade-in process with reference to the flowchart shown in FIG. 33. In step S281, the trade-in registration server 17 receives data about parts which are expected to run short from a part information system, not shown. In step S282, the trade-in registration server 17 receives the data about the parts which are expected to run short from the part information system, not shown. In step S282, on the basis of the data about the parts which are expected to run short, the trade-in registration server 17 identifies the products associated with these parts (for example, the products using these parts or requiring these parts for repair).

In step S283, the trade-in registration server 17 requests the customer database 10 for the registration data of users who own the identified products. In response to the request from the trade-in registration server 17, the customer database 10 sends the registration data of the users to the trade-in registration server 17.

In step S284, the trade-in registration server 17 receives the registration data of the users owning the identified products.

In step S285, the trade-in registration server 17 requests the call center database 14 for the history data (for example, the number of times inquiries were made) about the inquiries made by the users owning the identified products. In response to the request from the trade-in registration server 17, the call center database 14 sends the history data about the inquiries made by the users owning the identified products to the trade in registration server 17.

In step S286, the trade-in registration server 17 receives the history data about the inquiries made by the users owning the identified products.

In step S287, the trade-in registration server 17 selects users on the basis of predetermined conditions or the inputs made by the operator of the trade-in registration server 17, the registration data of the users of the identified products, and the history data of the inquiries made by the users of the identified products.

In step S288, the trade-in registration server 17 makes the mail server 8 send a trade-in campaign mail to each user selected in step S287. The trade-in campaign mail includes trade-in prices and, if the user desired trade-in, a request for writing thereof into the Web server 7-1.

In step S289, if a response comes from any of the users to which the mail has been sent (namely, if any of the users writes a request for trade-in), the trade-in registration server 17 receives that response (acceptance or rejection of trade-in) from the Web server 7-1.

In step S290, the trade-in registration server 17 instructs the delivery instruction server 18 to deliver new products and collect the trade-in products, upon which the trade-in processing comes to an end.

Thus, the trade-in registration server 17 can instruct the delivery instruction server 18 to trade in the products of which parts are expected to run short.

For example, the traded-in products are removed of the parts which are expected to run short and reused. Therefore, the parts which are expected to run short can be obtained at lower costs than usual and, by presenting trade-in prices, manufacturers can sell their products in response to their trade-in policies.

The above-mentioned sequences of processes can be executed by hardware or software. The execution by software is supported by a computer in which the programs constituting the software are installed in a dedicated hardware device beforehand or by a general-purpose personal computer capable of executing various capabilities in which these programs are installed from the program recording medium.

The recording medium for storing computer-readable and executable programs may be a package medium, separated from a computer, constituted by the magnetic disk 71 (including floppy disk), the optical disc 72 (including CD-ROM (Compact Disc-Read Only Memory) and DVD (Digital Versatile Disc)), the magneto-optical disk 73 (including MD (Mini Disc)), or the semiconductor memory 74 or ROM 52, or the HDD 61 on which the programs are stored in a computer in advance, to provide to a user, as shown in FIG. 3.

It should be noted that the steps describing the programs to be stored in the recording medium are not only executed in a time-series manner in the order described, but also in parallel or in a discrete manner.

It should also be noted that the system as used herein denotes an entire apparatus constituted by a plurality of component units.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. An information processing system comprising:
determination means for determining whether a code identifying a product purchased by a purchaser of said product, said code being supplied from said purchaser along with information associated with said purchaser;
recording means for recording, if said code is found correct, said information associated with said purchaser; and
transmission control means for controlling, on the basis of said information recorded in said recording means, the transmission of a notice for requesting said purchaser for a reply of a comment on said product.

2. The information processing system according to claim 1, further comprising:
selection means for selecting, on the basis of said information associated with said purchaser and recorded in said recording means, said purchaser requested to make said reply of the comment on said product; and
wherein said transmission control means controls the transmission of said notice to said selected purchaser for said reply of the comment on said product.

3. The information processing system according to claim 2, wherein:
said selection means selects said purchaser requested to make said reply of the comment on said product on the basis of a period passed after the purchase of said product.

4. An information processing method comprising the steps of:
determining whether a code identifying a product purchased by a purchaser of said product, said code being supplied from said purchaser along with information associated with said purchaser;
recording, if said code is found correct, said information associated with said purchaser; and
controlling, on the basis of said information recorded in said recording step, the transmission of a notice for requesting said purchaser for a reply of a comment on said product.

5. A recording medium recording a computer-readable program, said program comprising the steps of:
determining whether a code identifying a product purchased by a purchaser of said product, said code being supplied from said purchaser along with information associated with said purchaser;
recording, if said code is found correct, said information associated with said purchaser; and
controlling, on the basis of said information recorded in said recording step, the transmission of a notice for requesting said purchaser for a reply of a comment on said product.
